# FASCICULE DE BREVET EUROPEEN

(11) **EP 2 244 901 B1**
(45) Date de publication et mention de la délivrance du brevet: **15.08.2012**
(21) Numéro de dépôt: 08862438.2
(22) Date de dépôt: 03.12.2008
(51) Int. Cl.: B60K 11/04, B62D 25/08, B62D 65/04

(54) **SOUS-ENSEMBLE DE BLOC AVANT DE VÉHICULE AUTOMOBILE**
VORDERENDE-UNTERBAUGRUPPE FÜR EIN KRAFTFAHRZEUG
MOTOR VEHICLE FRONT END SUBASSEMBLY

(30) Priorité: 03.12.2007 FR 0759506
(43) Date de publication de la demande: 03.11.2010
(73) Titulaire: Faurecia Bloc Avant, 92000 Nanterre (FR)
(72) Inventeur: MENARD, Magalie, F-90200 Auxelles Haut (FR); RIVIERE, Caroline, F-15320 Faverolles (FR); LAURENT, Claude, F-25420 Voujeaucourt (FR)
(74) Mandataire: Domenego, Bertrand
(86) Numéro de dépôt international: PCT/FR2008/052194
(87) Numéro de publication internationale: WO 2009/077707

(56) Documents cités:
- EP-A- 1 216 913
- EP-A- 1 857 316
- DE-A1- 10 233 626
- US-A1- 2002 014 322

## Description

La présente invention concerne un sous-ensemble de bloc avant de véhicule automobile, comprenant un cadre de support, une plaque de canalisation d'air et un radiateur disposés l'un derrière l'autre en travers du cadre de support, et un groupe moto-ventilateur disposé en regard d'une ouverture de la plaque, la plaque, le groupe moto-ventilateur et le radiateur étant supportés par le cadre de support.

EP 1 188 645 A1 décrit un sous-ensemble de bloc avant de ce type, dans lequel le groupe moto-ventilateur est fixé sur la plaque de canalisation d'air, elle-même fixée sur le cadre métallique.

Un but de l'invention est de fournir un sous-ensemble de bloc avant de véhicule automobile qui soit léger et de coût de fabrication faible.

A cet effet, l'invention propose un sous-ensemble de bloc avant de véhicule automobile du type précité, caractérisé en ce qu'au moins un du radiateur et du groupe-moto-ventilateur est supporté par le cadre de support séparément de la plaque.

D'autres caracteristiques figurent dans les revendication 2 à 9

L'invention concerne également un véhicule automobile comprenant un sous ensemble selon la revendication10.

L'invention concerne encore une série de sous-ensembles de bloc avant de véhicule automobile selon revendication 11.

L'invention et ses avantages seront mieux compris à la lecture de la description qui va suivre, donnée uniquement à titre d'exemple, et faite en référence aux dessins annexés, sur lesquels :

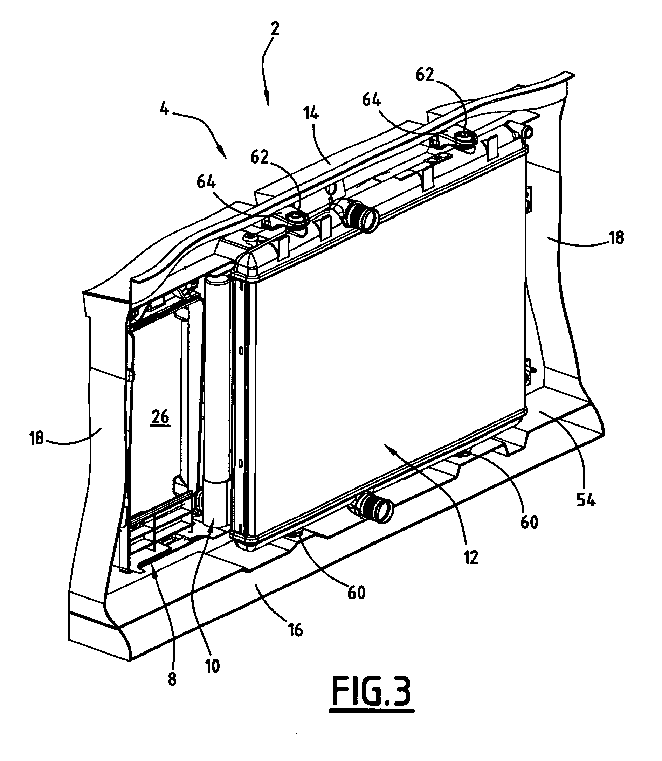

- les figures 1 à 3 sont des vues schématiques en perspective, d'un sous-ensemble de bloc avant de véhicule automobile conforme à l'invention, respectivement avant assemblage, partiellement assemblée et assemblée ; et
- la figure 4 est une vue schématique en coupe illustrant un détail du sous-ensemble de bloc avant des figures 1 à 3.

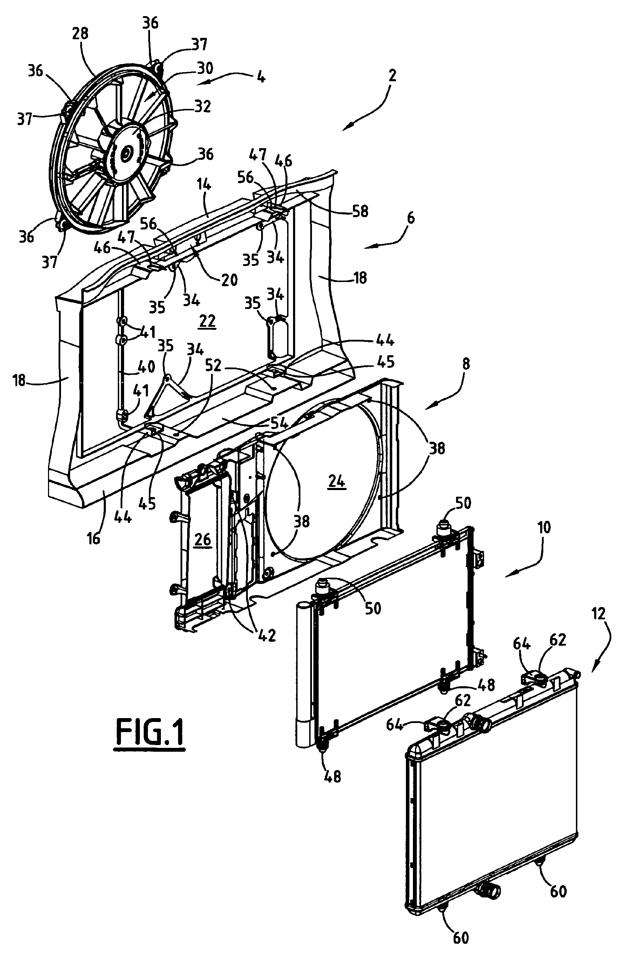

Tel que représenté sur la figure 1, le sous-ensemble 2 de bloc avant de véhicule automobile comprend un groupe moto-ventilateur (GMV) 4, un cadre 6 de support, une plaque 8 de canalisation d'air, un condenseur 10, et un radiateur 12.

Le cadre 6 est destiné à être fixé à l'extrémité avant de la structure (non représentée) d'un véhicule automobile, en particulier aux extrémités avant des longerons avants inférieurs d'une structure, délimitant le compartiment moteur. Le cadre 6 est prévu pour s'étendre dans un plan sensiblement vertical et transversal du véhicule automobile.

Le cadre 6 présente une forme générale rectangulaire. Il comprend une traverse supérieure 14, une traverse inférieure 16, et des montants 18 reliant les traverses 14, 16.

La traverse supérieure 14 comprend sensiblement en son centre une zone 20 de réception et de fixation d'un crochet (non représenté) de serrure de capot.

Le cadre 6 définit une ouverture de cadre 22 de forme rectangulaire. Le GMV 4, la plaque 8, le condenseur 10 et le radiateur 12 sont destinés à être disposés en regard de l'ouverture de cadre 22.

La plaque 8 possède un contour extérieur sensiblement rectangulaire complémentaire de celui de l'ouverture de cadre 22. Elle comprend une ouverture principale 24 et une ouverture auxiliaire 26 pour le passage d'air située l'une à côté de l'autre. L'ouverture principale 24 présente une forme circulaire, et l'ouverture auxiliaire 26 présente une forme rectangulaire allongée verticalement.

Le condenseur 10 et le radiateur 12 sont montés derrière la plaque 8, le radiateur 12 étant disposé derrière le condenseur 10. Ils possèdent chacun une forme rectangulaire s'inscrivant sensiblement dans celle de l'ouverture de cadre 22.

Le condenseur 10 est un condenseur d'un système de climatisation de l'habitacle du véhicule automobile. Le radiateur 12 est un radiateur d'un système de refroidissement d'un moteur du véhicule automobile.

Dans l'exemple illustré, le GMV 4 est prévu pour être monté devant la plaque 8, en regard de l'ouverture 4, pour forcer un flux d'air au travers du condenseur 10 et du radiateur 12 lorsque le GMV est activé.

Le GMV 4 comprend une virole 28 de support, une hélice 30 montée à rotation sur la virole 28, et un moteur 32 d'entraînement en rotation de l'hélice 30. Le moteur 32 est fixé de manière classique au centre de la virole 28, et porte l'hélice 30 en vue de son entraînement en rotation.

L'ouverture auxiliaire 24 est destinée à recevoir de manière connue des volets (non représenté) montés de façon à s'ouvrir lorsque le véhicule roule au-delà d'une vitesse déterminée, sous l'effet d'un flux d'air venant frapper la face de la plaque 8 orientée vers l'avant du véhicule, et sollicités en position de fermeture par des moyens de rappel. De tels volets s'ouvrent pour augmenter le flux d'air en direction du compartiment moteur lorsque le véhicule roule au dessus de la vitesse seuil.

Le cadre 6 est destiné à supporter individuellement chacun du GMV 4, de la plaque 8, du condenseur 10 et du radiateur 12.

A cet effet, le cadre 6 comprend des premiers éléments de fixation et de support du GMV 4.

Les premiers éléments de fixation et de support comprennent des pattes 34 s'étendant en saillie à partir d'un bord de l'ouverture de cadre 22, vers le centre de l'ouverture de cadre 22. Les pattes 34 sont venues de matière avec le cadre 6. Chaque patte 34 est munie d'un orifice de fixation 35.

Le GMV 4 comprend des attaches 36 chacune munie d'un orifice de fixation 37. Les attaches 36 sont réparties autour de la virole 28 de façon à pouvoir aligner les orifices de fixation 37 des attaches 36 avec ceux 35 des pattes 34 pour fixer le GMV 4 sur le cadre 6 à l'aide d'un organe de fixation, tel qu'un boulon ou un rivet, disposé au travers de chaque paire d'orifices 35, 37 alignés.

Le cadre 6 comprend des deuxièmes éléments de fixation et de support de la plaque 8.

Les deuxièmes éléments de fixation et de support comprennent les pattes 34. La plaque 8 possède des orifices de fixation 38 répartis autour de l'ouverture principale 24, et prévus pour être alignés avec ceux 35 des pattes 24.

En variante ou en option, les deuxièmes éléments de fixation et de support comprennent également une tige 40 venue de matière avec le cadre 6, et s'étendant en travers de l'ouverture de cadre 22, entre les traverses 14 et 16. La tige 40 est munie d'orifices de fixation 41.

Dans ce cas, la plaque 8 comprend des orifices de fixation 42 prévus pour être alignés avec ceux de la tige 40 pour fixer la plaque 8 sur le cadre 6 à l'aide d'un organe de fixation, tel qu'un boulon ou un rivet, disposé au travers de chaque paire d'orifices 41, 42 alignés.

En variante ou en option, les deuxièmes éléments de fixation et de support comprennent des orifices de fixation (non représentés) répartis autour du cadre, et disposés notamment sur les montants 18, et la plaque 8 comprend sur son pourtour des orifices de fixation correspondants.

Le cadre 6 comprend des troisièmes éléments de fixation et de support du condenseur 10.

Les troisièmes éléments de fixation et de support comprennent des brides 44, 46 venues de matière avec le cadre 6. Les brides 44, 46 comprennent une paire de brides inférieures 44 réparties le long de la traverse inférieure 16, et une paire de brides supérieures 30 réparties le long de la traverse supérieure 14.

Les brides inférieures 44 sont munies d'orifices de fixation 45. Les brides supérieures 46 sont munies d'encoches 47 ouvertes vers l'arrière.

Le condenseur 10 comprend une paire de doigts inférieurs 48 disposé le long d'un bord inférieur du condenseur et destinés à être inséré dans les orifices des brides inférieures 44, et une paire de doigts supérieurs 50 destiné à être encliquetés dans les encoches des brides supérieures 46.

Le condenseur 10 est monté sur le cadre 6 en disposant le condenseur en position inclinée vers l'arrière, puis en insérant les doits inférieurs 48 dans les orifices des brides inférieures 44, puis en basculant le condenseur 10 vers le haut jusqu'à encliqueter les doigts supérieurs 50 dans les encoches 47 des brides supérieures 46.

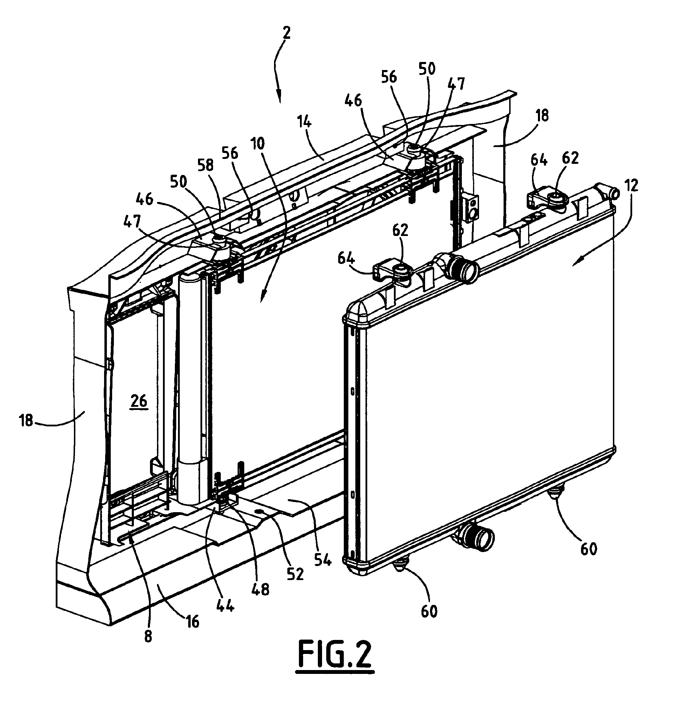

La figure 2 illustre le sous-ensemble 2 après montage du GMV 4, de la plaque 8 et du condenseur 10 sur le cadre 6, et avant montage du radiateur 12 sur le cadre 6.

Le cadre 6 comprend des quatrièmes éléments de fixation et de support du radiateur 12.

Les quatrièmes éléments de fixation et de support comprennent des orifices de fixation 52 ménagés dans une aile 54 de la traverse inférieure 16, et des orifices de fixation 56 ménagés au fond d'empreintes formées dans une aile 58 de la traverse supérieure 14.

Le radiateur 12 comprend une paire de pions inférieurs 60 disposés le long d'un bord inférieur du radiateur 12, et destiné à s'insérer dans les orifices de fixation 52, et une paire de pion supérieurs 62 disposés le long d'un bord supérieur du radiateur 12. Le radiateur 12 comprend des pièces de fixation 64 engagées sur les pions supérieurs 62, et prévues pour être vissées sur la traverse supérieure 14 à l'aide des orifices de fixation 52.

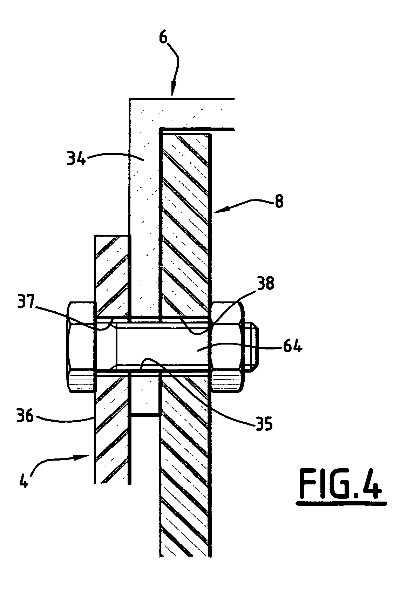

Tel que représenté sur la figure 4, chaque patte 34 est prise en sandwich entre une attache 36 du GMV 4 et la plaque 8, un organe de fixation 64 traversant l'attache 36, la patte 34 et la plaque 8.

L'organe de fixation 64 transmet, d'une part, le poids de plaque 8 au cadre 6, et, d'autre part, le poids du GMV 4 au cadre, sans que le GMV 4 et la plaque 8 ne se supportent mutuellement.

Le GMV 4 et la plaque 8 utilisent donc les mêmes éléments de fixation, mais le GMV 4 et la plaque 8 sont supportés séparément l'un de l'autre par le cadre 6, sans que le GMV 4 et la plaque 8 ne se supportent mutuellement.

Le cadre 6 supporte individuellement chacun du GMV 4, de la plaque 8, du radiateur 12 et du condenseur 10. En d'autres termes, aucun du GMV 4, de la plaque 8, du radiateur 12 et du condenseur 10 ne supporte le poids d'un autre de ces organes fonctionnels. En particulier, la plaque 8 ne supporte aucun du GMV, du radiateur 12 et du condenseur 10.

En particulier, le GMV 4 et le radiateur 12 sont supportés par le cadre 6 séparément de la plaque 8, i.e. sans que la plaque 8 ne supporte le poids du GMV 4 ou du radiateur 12, et sans que le GMV 4 ou le radiateur 12 ne supporte la plaque 8.

La plaque 8 n'assume donc pas de fonction structurelle de support du GMV 4, du condenseur 10 ou du radiateur 12. Il est donc possible de prévoir une plaque 8 de faible résistance mécanique plus légère, en utilisant un matériau moins dense ou moins résistant, ou des épaisseurs de matériau moins importantes. La plaque 8 est réalisée facilement de manière intégrale en une seule pièce, par moulage par injection de matière plastique.

Un cadre 6 de résistance mécanique suffisante est réalisé de préférence en métal, de préférence de manière intégrale en une seule pièce, par exemple par moulage ou moulage par injection. Un cadre 6 métallique léger est obtenu en réalisant le cadre 6 en magnésium ou en alliage de magnésium.

Il en résulte que le sous-ensemble 2 est léger, tout en étant résistant et de coût de fabrication faible.

On notera que la plaque 8 peut être utilisée pour supporter des éléments légers, tel que les portions d'extrémités des tuyaux d'alimentation du condenseur 10 ou du radiateur 12, ou les portions d'extrémité des fils électriques d'alimentation du moteur du GMV 4. En revanche, la plaque 8 n'est pas utilisée pour supporter le poids des autres organes fonctionnels (GMV 4, condenseur 10 ou du radiateur 12) supportés par le cadre 6.

La fixation du GMV 4 et de la plaque 8 sur le cadre 6 à l'aide des mêmes éléments de fixation et de support (pattes 24) permet de réduire le poids du cadre ainsi que le nombre d'opérations d'assemblage et le coût de fabrication du sous-ensemble 2.

Dans une variante, le cadre 6 comprend des éléments de fixation distincts pour la plaque 8 et le GMV 4.

Dans une variante de sous-ensemble de bloc avant pour véhicule automobile dépourvu de système de climatisation, le sous-ensemble de bloc avant ne comprend pas de condenseur.

Dans une variante, la traverse supérieure 14 du cadre 6 comprend des prolongements s'étendant latéralement au-delà des montants 18, et destinées à être fixés sur la structure du véhicule, notamment sur des longerons d'aile, de façon à accroître la rigidité du sous-ensemble, et en option à assurer des fonctions supplémentaires, par exemple la fixation de blocs optiques.

Il est en outre possible de réaliser des économies d'échelle en utilisant le même cadre 6 pour différents véhicules automobiles.

A cet effet, il est possible de fabriquer une série de sous-ensemble de bloc avant de véhicule automobile, comprenant des premiers sous-ensembles de bloc avant conformes à l'invention, possédant des cadre de support identiques et des plaques de canalisation d'air identiques, et des seconds sous-ensembles de bloc avant conformes à l'invention, possédant des cadres de support identiques à ceux des premiers sous-ensembles, et des plaques de canalisation d'air identiques entre elles mais différentes de celles des premiers sous-ensembles.

Il en résulte que les coûts de fabrication sont amortis plus rapidement pour le cadre de support métallique, dont la fabrication est plus coûteuse que celle des plaques de canalisation d'air.

Ce mode de conception de sous-ensembles de véhicules automobile est particulièrement adapté aux véhicules automobiles utilisant la même plate-forme technique.

De préférence, un cadre de support commun à plusieurs gammes de véhicule utilisant la même plate-forme, et destiné à recevoir de plaques de canalisation d'air et/ ou des organes fonctionnels (GMV, radiateur condenseur...) différents selon les versions, comprend d'avance tous les points de fixation nécessaires pour les différentes versions, pour répondre à la diversité des produits.

## Revendications

1. Sous-ensemble de bloc avant de véhicule automobile, du type comprenant un cadre de support (6), une plaque (8) de canalisation d'air et un radiateur (12) disposés l'un derrière l'autre en travers du cadre de support (6), et un groupe moto-ventilateur (4) disposé en regard d'une ouverture (24) de la plaque (8), la plaque (8), le groupe moto-ventilateur (4) et le radiateur (12) étant supportés par le cadre de support (6),
**caractérisé en ce qu'**au moins un du radiateur (12) et du groupe-moto-ventilateur (4) est supporté par le cadre de support (6) séparément de la plaque (8).

2. Sous-ensemble selon la revendication 1, dans lequel le groupe moto-ventilateur (4) est supporté individuellement par le cadre de support (6).

3. Sous-ensemble selon la revendication 1 ou 2, dans lequel le radiateur (12) est supporté individuellement par le cadre de support (6).

4. Sous-ensemble selon l'une quelconque des revendications précédentes, dans lequel la plaque (8) est supportée individuellement par le cadre de support (6).

5. Sous-ensemble selon l'une quelconque des revendications précédentes comprenant un condenseur (10) pour un système de climatisation, le condenseur (10) étant supportés individuellement par le cadre de support (6).

6. Sous-ensemble selon l'une quelconque des revendications précédentes, dans lequel le cadre de support (6) est réalisé en magnésium.

7. Sous-ensemble selon l'une quelconque des revendications précédentes, dans lequel le cadre de support (6) est réalisé de manière intégrale en une seule pièce.

8. Sous-ensemble selon l'une quelconque des revendications précédentes, dans lequel la plaque (8) de canalisation d'air est réalisée en matière plastique.

9. Sous-ensemble selon l'une quelconque des revendications précédentes, dans lequel le cadre de support (6) comprend une traverse inférieure (16), une traverse supérieure (14) et des montants (18) reliant les traverses (14, 16), la traverse supérieure (14) comprenant des prolongements s'étendant latéralement au-delà des montants (18) et destinés à être fixés à la structure du véhicule automobile.

10. Véhicule automobile comprenant un sous ensemble selon l'une quelconque des revendications précédentes.

11. Série de sous-ensembles de bloc avant de véhicule automobile, comprenant des premiers sous-ensembles de bloc avant selon l'une quelconque des revendications 1 à 9, possédant des cadres de support identiques et des plaques de canalisation d'air identiques, et des seconds sous-ensembles de bloc avant selon l'une quelconque des revendications 1 à 9, possédant des cadres de support identiques à ceux des premiers sous-ensembles, et des plaques de canalisation d'air identiques entre elles mais différentes de celles des premiers sous-ensembles.

## Claims

1. Motor vehicle front end subassembly of the type comprising a support surround (6), an air-ducting panel (8) and a radiator (12) which are arranged one behind the other across the support surround (6), and a motor fan unit (4) arranged facing an opening (24) of the panel (8), the panel (8), the motor fan unit (4) and the radiator (12) being supported by the support surround (6),
**characterised in that** at least one of the radiator (12) and the motor fan unit (4) is supported by the support surround (6) separately from the panel (8).

2. Subassembly according to claim 1, wherein the motor fan unit (4) is supported individually by the support surround (6).

3. Subassembly according to claim 1 or 2, wherein the radiator (12) is supported individually by the support surround (6),

4. Subassembly according to any one of the preceding claims, wherein the panel (8) is supported individually by the support surround (6).

5. Subassembly according to any one of the preceding claims, comprising a condenser (10) for an air-conditioning system, the condenser (10) being supported individually by the support surround (6).

6. Subassembly according to any ane of the preceding claims, wherein the support surround (6) is produced from magnesium.

7. Subassembly according to any one of the preceding claims, wherein the support surround (6) is produced in an integral manner in one piece,

8. Subassembly according to any one of the preceding claims, wherein the air-ducting panel (8) is produced from plastics material.

9. Subassembly according to any one of the preceding claims, wherein the support surround (6) comprises a lower cross-member (16), an upper cross-member (14) and uprights (18) connecting the cross-members (14 16), the upper cross-member (14) comprising lengthened portions which extend laterally beyond the uprights (18) and which are to be secured to the structure of the motor vehicle.

10. Motor vehicle comprising a subassembly according to any one of the preceding claims.

11. Series of motor vehicle front end subassemblies, comprising first front end subassemblies according to any one of claims 1 to 9, having identical support surrounds and identical air-ducting panels, and second front end subassemblies according to any one of claims 1 to 9, having support surrounds identical to those of the first subassemblies, and air-ducting panels identical to each other but different from those of the first subassemblies,

## Patentansprüche

1. Vorderende-Unterbaugruppe für ein Kraftfahrzeug des Typs, der einen Tragrahmen (6), eine Luftkanalisationsplatte (8) und eignen Kühler (12) aufweist, die einer hinter dem anderen quer über den Tragrahmen (6) angeordnet sind, und einen Abluftventilator (4), der gegenüber einer Öffnung (24) der platte (8) angeordnet ist, wobei die Platte (8), der Abluftventilator (4) und der Kühler (12) von dem Tragrahmen (6) getragen werden,
**dadurch gekennzeichnet, dass** wenigstens entweder der Kühler (12) oder der Abluftventilator (4) von dem Tragrahmen (6) getrennt von der Platte (8) getragen wird.

2. Unterbaugruppe nach Anspruch 1, bei der der Abluftventilator (4) einzeln von dem Tragrahmen (6) getragen wird.

3. Unterbaugruppe nach Anspruch 1 oder 2, bei der der Küchler (12) einzeln von dem Tragrahmen (5) getragen wird.

4. Unterbaugruppe nach einem der vorhergehenden Ansprüche, bei der die Platte (8) einzeln von dem Tragrahmen (6) getragen wird.

5. Unterbaugruppe nach einem der vorhergehenden Ansprüche, die einen Kondensator (10) für eine Klimatisierungsanlage aufweist, wobei der Kondensator (10) einzeln von dem Tragrahmen. (6) getragen wird.

6. Unterbaugruppe nach einem der vorhergehenden Ansprüche, bei der der Tragrahmen (6) aus Magnesium hergestellt ist.

7. Unterbaugruppe nach einem der vorhergehenden Ansprüche, bei der der Tragrahmen (6) integral aus einem einzigen Teil hergestellt ist.

8. Unterbaugruppe nach einem der vorhergehenden Ansprüche, bei der die Luftkanalisationsplatte (8) aus Kunststoff hergestellt ist.

9. Unterbaugruppe nach einem der vorhergehenden Ansprüche, bei der der Tragrahmen (6) einen unteren Querträger (16), einen oberen Querträger (14) und Ständer (18), die die Querträger (14, 16) verbinden, aufweist, wobei der obere Querträger (14) Verlängerungen aufweist, die sich seitlich über die Ständer (18) hinaus erstrecken und dazu bestimmt sind, an der Struktur des Kraftfahrzeugs befestigt zu werden.

10. Kraftfahrzeug, das eine Unterbaugruppe nach einem der vorhergehenden Ansprüche aufweist.

11. Reihe von Vorderende-Unterbaugruppen für ein Kraftfahrzeug, die erste Vorderende-Unterbaugruppen nach einem der Ansprüche 1 bis 9 aufweist, die identische Tragrahmen und identische Luftkanalisationsplatten besitzen, und zweite Vorderernde-Unterbaugruppen nach einem der Ansprüche 1 bis 9, die Tragrahmen besitzen, die mit denen der ersten Unterbaugruppen identisch sind, und Luftkanalisationsplatten, die untereinander identisch aber von denen der ersten Unterbaugruppen unterschiedlich sind.
